# EUROPEAN PATENT SPECIFICATION

(11) **EP 0 610 531 B1**
(45) Date of publication and mention of the grant of the patent: **19.06.1996**
(21) Application number: 93102050.7
(22) Date of filing: 10.02.1993
(51) Int. Cl.: D21C 5/02

(54) **Deinking composition for flotation and deinking method**
Entfärbungszusammensetzung zur Flotation und Entfärbungsverfahren
Composition de désencrage pour flotation et procédé de désencrage

(43) Date of publication of application: 17.08.1994
(73) Proprietor: LION CORPORATION, Sumida-ku Tokyo (JP)
(72) Inventor: Okamoto, Yutaka, Koganei-shi, Tokyo (JP); Hirakouchi, Yoshie, Koga-shi, Ibaraki-ken (JP); Hagiwara, Masaaki, Kokubunji-shi, Tokyo (JP)
(74) Representative: VOSSIUS & PARTNER

(56) References cited:
- GB-A- 2 063 326
- US-A- 4 666 558
- DATABASE WPIL Section Ch, Week 8615, Derwent Publications Ltd., London, GB; Class A97, AN 86-097042

## Description

The present invention relates to a deinking composition for reclaiming waste paper, which is used in the preparation of regenerated pulp from printed waste paper such as newspaper, magazines, journals, wood-free paper, copying paper and computer printout paper and a method for using the deinking composition.

More specifically, the present invention relates to a deinking composition and a method of using the same, which are suitable for deinking printed waste paper through flotation, can provide high quality regenerated pulp having a high brightness and a low content of residual ink and can ensure a stable deinking operation.

There has long been known methods for reclaiming printed waste paper to give starting materials for paper-making. In particular, the reclaiming of printed waste paper has increasingly become important from the viewpoint of saving energy and natural resources as well as protection of environment and correspondingly there have been required for the development of techniques capable of providing high quality regenerated pulp having excellent properties such as a high brightness and a low content of residual ink.

In general, methods for deinking printed waste paper can roughly be divided into two groups, one of which is a washing method and the other of which is a flotation method. There have been known a variety of literatures and knowledges relating to these processing methods, deinking mechanisms and difference in quality between deinking compositions used in these processing methods. See, for instance, Pulp & Paper, 1986, Nov., p. 59; Pulp & Paper, 1989, Mar., p. 60; Pulp & Paper, 1990, Mar., p. 76; Pulp & Paper, 1989, Mar., p. 97; Japanese Journal of Paper Technology, 1980, Aug., p. 37; 1989 TAPPI Pulping Conference, p. 343; Japan TAPPI Journal, Vol. 36, p. 1029; Japan TAPPI Journal, Vol. 39, p. 747; and US-A-4,483,741 and 4,518,459.

When summarizing literatures and, knowledges and experiences which have been obtained through practical operations, the washing method in general comprises the step of repeatedly diluting and dehydrating a pulp slurry, or removing separated and dispersed ink particles from the pulp slurry through a screen or with a washing equipment such as a centrifugal cleaner. In this method, the separation of ink is greatly dependent upon, principally, mechanical conditions for due to washing equipments such as a press, a screen and a cleaner. Moreover, the washing method suffers from various problems concerning consumption of natural resources and energy since the use of a large amount of water is required. In addition, the washing method is greatly dependent upon mechanical factors and, therefore, workability of each step is regarded as important. In particular, when a composition having an intensive foaming ability, in particular, a deinking composition is employed, troubles due to foams arise in each equipment or process and this leads to reduction of workability and a marked increase in consumption of electric power. Thus, a composition having a low foaming ability or foaming-inhibitory properties must be used in the washing mehods. Further the separated ink particles must be fine and well dispersed in a pulp slurry in order to improve the efficiency of removing the separated ink.

On the other hand, the flotation method mainly comprises removing separated ink particles from a pulp slurry by adhering the ink particles to foams generated in a flotator. Thus, the mechanism of the removal of ink for the flotation method is completely different from that for the washing method and in other words, inks are principally removed through chemical processes unlike the washing method. The deinking method in which the flotation process is adopted sometimes comprises a so-called washing or dewatering step, but the separated ink particles are mainly removed in the flotation process. The flotation method is advantageous in saving natural resources since the amount of water used in this method is smaller than that required for the washing method. To improve the effect of removing inks in the flotation method, the separated ink particles must be coagulated to form aggregates having a relatively large particle size. Moreover, an appropriate foaming ability is required for the flotation process since the separated ink particles must be removed through the adhesion thereof to foams in the flotation method. This foaming ability required for the flotation method is higher than that required for the washing method. On the other hand, if the foaming ability of a composition, in particular, that of a deinking composition is too high, various problems arise. For instance, it is difficult to scrape out foams during the flotation process and various troubles due to foaming arise in each step. This leads to the interruption of the operation and the yield of pulp is reduced. Accordingly, the deinking process cannot be carried out stably and it is sometimes difficult to obtain high quality regenerated pulp having a high brightness.

As has been discussed above in detail, the deinking mechanism for washing method is quite different from that for the flotation method and, therefore, they require the use of deinking compositions having different properties.

The flotation method has been adopted mainly in Japan and Europe because it can provide regenerated pulp having a brightness higher than that accomplished by the washing method and is excellent in saving in natural resources and energy as compared with the washing method. Moreover, the deinking method has recently been switched from the washing method to the flotation method likewise in the United States.

Until now, there have been filed a variety of patents relating to deinking compositions and methods for using the same. For instance, US-A-4,518,459 discloses a deinking method using a deinking composition obtained by adding a predetermined amount of propylene oxide to the terminal hydroxyl groups of alcohols or ethylene oxide adducts of alkylphenols, or by modifying, with benzyl ether, the terminal hydroxyl groups of alcohols or ethylene oxide- or ethylene oxide/propylene oxide block-adducts of alkylphenols. However, the method of this U.S. Patent relates to a washing method, while the present invention relates to a flotation method. Thus, the functions and properties of the deinking composition according to the present invention are quite different from those of the compositions used in the U.S. Patent. More specifically, the U.S. patent relates to deinking compositions particularly suitable for washing methods which require low foaming abilities or low forming-inhibitory effects, while the deinking compositions of the present invention are designed such that they can ensure a stable operation during the flotation step and that they have appropriate foaming abilities.

DE-A-2143912 likewise discloses a deinking method which uses a deinking composition obtained by adding ethylene oxide and propylene oxide to an alcohol or an alkylphenol to a desired extent and the flotation step is carried out at a temperature of not less than the clouding point of the deinking composition, but the method does not provide a high quality regenerated pulp having a high brightness and a low content of residual ink.

JP-A-51-84905, 53-31804, 55-51891, 55-51892 and 56-79795 disclose deinking compositions comprising alkylene oxide adducts of alcohols or alkylphenols. However, these deinking compositions have foaming abilities higher than those required for each step and cannot ensure stable operations during flotation since the foaming leads to interruption of the deinking operation and a decrease in the yield of the deinking method. In addition, the deinking compositions do not exhibit sufficient abilities of trapping ink particles during the flotation and hence do not always provide high quality regenerated pulp having a high brightness and a low content of residual ink.

JP-A-61-41386 discloses the use of a composition comprising an alkylene oxide adduct of an alcohol and an ethylene oxide adduct of an alcohol, but the composition does not have an ability of trapping ink particles. The ethylene oxide adduct of alcohol used in this method rather has high ability of dispersing ink. Therefore, the flotation method using this deinking composition cannot provide high quality regenerated pulp and stable operability. JP-A-50-142804, 61-186592, 62-177291 and 62-250291 disclose deinking compositions comprising alkylene oxide adducts of alcohols and higher fatty acids which can improve the ink-trapping properties of the alkylene oxide adducts of alcohols required for the flotation process. These compositions can improve the ink-trapping ability, but the use of these compositions makes it difficult to control foaming during flotation and to perform stable operation. JP-A-63-165591 discloses deinking compositions comprising alkylene oxide adducts of alcohols and alkylene oxide adducts of fatty acids for improving the ink-trapping ability of the alkylene oxide adducts of alcohols required for the flotation process. However, the use of these deinking compositions do not always provide stable operability during a deinking method in which a flotation process is included.

The deinking compositions disclosed in the foregoing German Patent and Japanese Unexamined Patent Publications do not always ensure stable operability and do not provide high quality regenerated pulp having a high brightness and a low content of residual ink, while the deinking composition provided by the present invention comprises a combination of two kinds of different specific deinking compositions which are designed such that they can ensure stable operation and can provide high quality regenerated pulp having a high brightness and a low content of residual ink. Moreover, the foregoing references do not disclose the influences of by-products simultaneously formed during the preparation of the deinking compositions on the deinking properties of the resulting deinking compositions.

Further CA-A-729,071 discloses a deinking composition comprising an alkylphenol to which an alkylene oxide is added, but the deinking composition does not exhibit sufficient ink-trapping properties when it is used in the flotation method and cannot provide high quality regenerated pulp. In addition, it is not preferred from the viewpoint of protection of environment since alkylphenols are in general less biodegradable.

US-A-3,021,372; 2,856,434; 2,903,486; 3,340,309; 3,444,242 and 3,625,909 disclose compounds which are prepared by adding alkylene oxides to alcohols or alkylphenols, but these compounds quite differ, in structures and applications, from those of the present invention. US-A-4,162,186 also discloses a deinking composition, but the deinking composition comprises a combination of an oil-soluble alcohol ethoxylate with a water-soluble alcohol ethoxylate and completely differs from the deinking composition of the present invention.

Accordingly, a primary object of the present invention is to provide a deinking composition exhibiting good deinking properties in the flotation method.

Another object of the present invention is to provide a deinking composition for regeneration of waste paper which can be used in a deinking method including a flotation step and can provide high quality regenerated pulp having a high brightness and a low content of residual ink and which can ensure stable operation of the deinking method.

Another object of the present invention is to provide a flotation method for effectively deinking from waste paper.

Another object of the present invention is to provide a flotation method for effectively deinking from waste paper which can provide high quality regenerated pulp having a high brightness and a low content of residual ink and which can ensure stable operation.

These objects of the present invention have been achieved by the surprising finding of simultaneously using, as a deinking composition, different monoalkyl ethers of ethylene oxide-propyelen oxide copolymers whose average-added molar number m of the ethylene oxide and that n of the propylene oxide fall within specific ranges respectively and have structures different from one another and of simultaneously using the deinking composition with a predetemined amount of a polyalkylene oxide.

According to the first aspect of the present invention, there is provided a deinking composition for flotation which comprises 99.7 to 97% by weight of a mixture which comprises monoalkyl ethers of ethylene oxide/propylene oxide copolymers represented by the following general formulas (A) and (B)

R¹O - (PO)ₙ₁ - [(EO)ₘ · (PO)ₙ₂] - H (A)

R²O - (EO)ₘ₁ - [(EO)ₘ₂ · (PO)ₙ] - H (B)

wherein R¹ represents an alkyl group having 12 to 22 carbon atoms; R² represents an alkyl group having 16 to 24 carbon atoms; m/n1 + n2 ranges from 0.5 to 1.5; m1 + m2/n ranges from 1.1 to 2.0, the averaged molar numbers m and m1 + m2 of added ethylene oxide moieties range from 10 to 30 and the averaged molar numbers n and n1 + n2 of added propylene oxide moieties range from 8 to 35; EO and PO represent ethylene oxide and propylene oxide units respectively; the EO and PO in the brackets may be in either a random or block configuration; and the weight ratio of the compound (A) to the compound (B) ranges from 10:90 to 90:10;
and 0.3 to 3.0% by weight of a polyoxyalkylene oxide selected from
polyethylene oxides, polypropylene oxide and ethylene oxide/propylene oxide copolymers.

According to the second aspect of the present invention, there is provided a deinking composition for flotation which comprises 99.7 to 97% by weight of a mixture comprising monoalkyl ethers of ethylene oxide/propylene oxide copolymers represented by the following general formulas (A-1) and (A-2)

R³O - (PO)ₙ₃ - (EO)ₘ · (PO)ₙ₄ - H (A-1)

R⁴O - (PO)ₙ₅ - [(EO)ₘ · (PO)ₙ₆] - H (A-2)

wherein R³ and R⁴ independently represent an alkyl group having 12 to 22 carbon atoms; m/n3 + n4 = 0.5∼1.5; m/n5 + n6 = 0.5-1.5, the averaged molar number m of the added ethylene oxide moieties ranges from 10 to 30 and the averaged molar numbers n3 + n4 and n5 + n6 of the added propylene oxide moieties range from 8 to 35; EO and PO represent ethylene oxide and propylene oxide units respectively, (EO)ₘ · (PO)ₙ₄ being in the form of a block configuration and [(EO)ₘ · (PO)ₙ₆] being in the form of a random configuration; and the mixing ratio of the compound (A-1) to the compound (A-2) ranging from 10:90 to 90:10 (weight ratio);
and 0.3 to 3.0% by weight of a polyalkylene oxide selected from the group consisting of polyethylene oxides, polypropylene oxides and ethylene oxide/propylene oxide copolymers.

At first, the first aspect of the present invention will hereinafter be explained in more detail.

The ether compounds represented by the foregoing general formula (A) comprise higher alcohols carrying alkyl groups having 12 to 22 carbon atoms to which propylene oxide units are added through the oxygen atom, have a ratio of the total added molar number of ethylene moieties to that of propylene oxide moieties (m/(n1 + n2)) ranging from 0.5 to 1.5, preferably 0.5 to 0.9. These ether compounds have hydrophobicity higher than those of the conventional deinking compositions of higher alcohol type and thus have a strong affinity to separate ink particles and ink-trapping properties required for the flotation process. Therefore, the deinking composition of the present invention makes it possible to efficiently separate and remove, from pulp, ink particles separated during the flotation through the adhesion thereof to the generated foams of the deinking composition and to hence provide regenerated pulp having a high brightness. If the added molar number ratio exceeds 1.5, the hydrophilicity of the deinking composition increases, while the affinity of the composition to ink particles and ink-trapping properties thereof are lowered. As a result, any regenerated pulp having a high brightness cannot be obtained. On the other hand, if it is less than 0.5, the deinking composition exhibits a low foaming ability during the flotation step, it is difficult to scrape out foams during the flotation. Moreover, the deinking composition does not exhibit sufficient ink-trapping properties and thus regenerated pulp having a sufficient brightness cannot be obtained. In addition, if the added molar number ratio is controlled to a range of from 0.5 to 0.9, the ink-trapping properties of the deinking composition is further improved.

On the other hand, the ether compound represented by the foregoing general formula (B) comprises a higher alcohol to which ethylene oxide moieties are first added and the compound exhibits a desired effect when the ratio of the total added molar number of the ethylene oxide moieties to that of the propylene oxide moieties, (m1+m2)/n, ranges from 1.1 to 2.0. In particular, The compound (B) has a high affinity to printed ink on the surface of paper and excellent in ink-separation properties in particular in defibering and aging steps. If the ratio exceeds 2.0, excess foaming is caused during the flotation process and thus stable operation cannot be ensured. Further, it is difficult to sufficiently scrape out foams generated and to obtain regenerated pulp having a high brightness. On the other hand, if the ratio is less than 1.1, the resulting deinking composition does not have a sufficient affinity to printed ink on the surface of paper required for the defibering and aging steps. This leads to a decrease in the ink-separation properties and hence to the formation of only pulp having a high content of residual ink.

The compound of Formula (A) is prepared by first adding, to a higher alcohol, at least one, preferably 1 to 5 moles of propylene oxide to give a propylene oxide adduct of the higher alcohol and then adding ethylene oxide and propylene oxide in either a random or block configuration. When ethylene oxide and propylene oxide are added to a higher alcohol in a block configuration, it is preferred to first add ethylene oxide to the alcohol and then propylene oxide to the resulting adduct. Alternatively, the compound of Formula (A) can be prepared by adding, to a higher alcohol, at least one mole of propylene oxide, then randomly adding ethylene oxide and propylene oxide and further adding propylene oxide to the end of the product.

On the other hand, the compound represented by the foregoing general formula (B) can be prepared by first adding, to a higher alcohol, at least one mole, preferably 1 to 8 moles of ethylene oxide to give an ethylene oxide adduct of the higher alcohol and then adding ethylene oxide and propylene oxide to the adduct in either a random or block configuration. When the ethylene oxide and propylene oxide are added in a block configuration, it is preferred to first add ethylene oxide and then propylene oxide to the resulting ethylene oxide adduct. Alternatively, the compound of Formula (B) can also be prepared by directly adding ethylene oxide and propylene oxide to a higher alcohol in a random configuration. In this case, ethylene oxide would be first added to the higher alcohol selectively since the reactivity of ethylene oxide with the alcohol is greater than that of propylene oxide.

When preparing the foregoing ether compounds, it is very important in the present invention to control the water content of the reaction system to not more than 0.3% and to add a catalyst, for instance, a basic catalyst such as sodium hydroxide or potassium hydroxide or a magnesium oxide-aluminum solid phase catalyst to the reaction system such that the amount of the catalyst is always maintained to not more than 0.25% with respect to an intermediate product or a final product in each alkylene oxide addition step in order to limit the content of by-products present in the final product such as polyethylene glycol, polypropylene glycol and polyalkylene glycols which are polymers of ethylene oxide and propylene oxide to about 0.3 to about 3% by weight. However, the content of the polyalkylene glycol can subsequently be adjusted to the range defined above through supplementation of a desired polyalkylene glycol.

The higher alcohols, from which the alcohol residues: R¹O of the compound (A) are derived, are those having 12 to 22, preferably 16 to 22 and more preferably 18 to 22 carbon atoms, while the higher alcohols, from which the alcohol residues: R²O of the compound (B) are derived, are those having 16 to 24, preferably 18 to 22 carbon atoms. Specific examples of such higher alcohols include lauryl alcohol, myristyl alcohol, palmityl alcohol, heptadecanol, stearyl alcohol, nonadecanol, arachidic alcohol, behenyl alcohol, tricosanol, tetracosanol, oleyl alcohol, alcohols derived from animal and plant oil fatty acids such as tallow oil alcohol, fish oil alcohol, lard alcohol and hardened products thereof.

It is important requirements for the deinking composition that the composition has a total molar number of the added ethylene oxide moieties ranging from 10 to 30 moles, preferably 12 to 28 moles per mole of a higher alcohol expressed in terms of the charged molar number thereof and a total molar number of the added propylene oxide moieties ranging from 8 to 35 moles, preferably 9 to 30 moles per mole of a higher alcohol expressed in terms of the charged molar number thereof, that the ratio of the total molar number of the added ethylene oxide to the total molar number of the added propylene oxide ranges from 0.5 to 1.5, preferably 0.5 to 0.9 for the compound of Formula (A) or 1.1 to 2.0 for the compound of Formula (B) and that the carbon atom number of the alkyl group ranges from 12 to 22 for the compound of Formula (A) or 16 to 24 for the compound of Formula (B).

If the carbon atom numbers of the alkyl groups of these higher alcohols are smaller than each corresponding lower limit, the resulting compound has insufficient hydrophobicity because of short chain length of the alkyl group, the foaming ability thereof is correspondingly insufficient even if the molar numbers of added ethylene oxide and propylene oxide fall within the ranges defined above respectively, the ink-trapping ability thereof during flotation is likewise insufficient and separated ink particles are not sufficiently adhered to foams generated by the compound. Thus, high quality regenerated pulp having a high brightness cannot be obtained.

On the other hand, if the length of the alkyl group is longer than the upper limit defined above, the deinking composition is not sufficiently dissolved and dispersed in a medium during defibering and accordingly high quality regenerated pulp having a high brightness and a low content of remaining ink cannot be produced.

Further if the molar numbers of added ethylene oxide and propylene oxide as well as the ratio of the total molar number of the added ethylene oxide to the total molar number of the added propylene oxide are outside the foregoing corresponding ranges, the formation of high quality regenerated pulp and stable operation of the deinking treatment cannot be ensured even if the carbon atom numbers of the alkyl groups of the compounds of Formulas (A) and (B) fall within the ranges defined above.

Furthermore, it is also important requirements, when preparing the compounds, i.e., adding alkylene oxide to higher alcohols, that the reaction system is sufficiently purged with nitrogen gas and dehydrated at a high temperature under reduced pressure to control the water content to about 0.3% or less by weight prior to the addition of the alkylene oxide and that, upon preparing the ether compounds of Formulas (A) and (B), the amount of the catalyst is always maintained to not more than 0.25% with respect to an intermediate product or a final product in each alkylene oxide addition step, in order to limit the content of by-products present in the final product such as polyethylene glycol, polypropylene glycol and polyalkylene glycols which are polymers of ethylene oxide and propylene oxide to about 0.3 to about 3% by weight.

The amounts of water and catalyst greatly affect the amount of by-products, in particular polyethylene glycol, polypropylene glycol and polyalkylene glycols which are polymers of ethylene oxide and propylene oxide present in the final product as described in Journal of Japan Oil Chemist's Society, 1979, 28, p. 881. Therefore, the control of the amounts of water and catalyst is an essential requirement for limiting the amount of the by-products formed during the preparation of these ether compounds to a range of from about 0.3 to about 3% by weight.

The amount of these by-products should be limited to the range defined above for the following reason: polyethylene glycol, polypropylene glycol and polyalkylene glycols are well-known as compounds having high dispersion properties and foaming ability and, therefore, if they are present in an amount of more than about 3% by weight, they serve to disperse inks and strengthen the foaming ability during flotation. In particular, the use thereof adversely affect the flotation method which requires good ink-trapping properties and an appropriate foaming ability. Since these by-products do not have hydrophobic groups such as alkyl groups, they do not exhibit ink-trapping ability at all and accordingly, they do not serve to remove ink particles separated during the flotation from a pulp slurry. On the other hand, if the amount of these by-products is less than about 0.3% by weight, the resulting deinking composition does not exhibit an appropriate foaming ability during the flotation, the separated ink particles are not sufficiently trapped by the foams and thus regenerated pulp having a high brightness cannot be obtained.

The second aspect of the present invention will hereinafter be explained in more detail.

The feature of the second aspect of the present invention resides in employment of two ether compounds, the both of which belong in the ether compounds represented by the foregoing formula (A) and one of which is of block configuration and other of which is of random configuration.

The ether compounds represented by the foregoing general formula (A-1) may be prepared by adding to a higher alcohol carrying alkyl groups having 12 to 22 carbon atoms propylene oxides, ethylene oxides and propylene oxides in this order so as to form it in the block configulation In this respect, it is preferable that a ratio of the total added molar number of ethylene moieties to that of propylene oxide moieties (m/(n3 + n4)) be from 0.5 to 1.5, more preferably 0.5 to 0.9. These ether compounds have a strong affinity to separate ink particles and ink-trapping properties required for the flotation process, compared with those of the conventional deinking compositions of higher alcohol type. Therefore, it is possible to efficiently separate and remove, from pulp, ink particles (in particular, ink particles of not larger than 4µm) separated during the flotation through the adhesion thereof to the generated foams of the deinking composition and to hence provide regenerated pulp having a high brightness and high b value which indicates less dark color. If the added molar number ratio exceeds 1.5, the hydrophilicity of the deinking composition increases, while ink-trapping properties thereof are lowered. As a result, any regenerated pulp having a high brightness cannot be obtained. On the other hand, if it is less than 0.5, the deinking composition exhibits a low foaming ability during the flotation step, it is difficult to scrape out foams during the flotation. In addition, if the added molar number ratio is controlled to a range of from 0.5 to 0.9. the ink-trapping properties of the deinking composition is further improved.

On the other hand, the ether compound represented by the foregoing general formula (A-2) may be prepared by adding propylene oxides to a higher alcohol carrying alkyl groups having 12 to 22 carbon atoms and then adding a mixture of ethylene oxides and propylene oxides thereto so as to form it in a random configuration. In this respect, the ratio of the total added molar number of ethylene moieties to that of propylene oxide moieties (m/(n5 + n6)) is from 0.5 to 1.5, preferably 0.5 to 0.9. These ether compounds have a strong affinity to separate ink particles and ink-trapping properties required for the flotation process. The membrane (comprising the compounds) of the foams formed at the flotation is of high viscosity, so that a constant forming can be maintained even if amount and quality of the wasted paper varies. Therefore, it is possible to efficiently separate and remove, from pulp, ink particles separated during the flotation through the adhesion thereof to the generated foams of the deinking composition and to hence provide regenerated pulp having a high brightness. If the added molar number ratio exceeds 1.5, the viscosity of the membrane of the foams increases, while ink-trapping properties thereof are lowered and an amount of foams become excess, so that it is not possible to maintain a stable operation and it is difficult to scrape out foams during the flotation. As a result, any regenerated pulp having a high brightness cannot be obtained. On the other hand, if it is less than 0.5, the viscosity of the membrane of the foams lowers, foaming at the flotation becomes insufficient and therefore, sufficient ink-trapping properties required for the flotation process cannot be obtained.

The weight of ratio of compound (A-1) to compound (A-2) is 90/10 to 10/90, preferably 85/15 to 15/85 . In the second aspect of the invention, compound (B) may be added to the combination of components (A-1) and (A-2).

The conditions for preparing the ether compounds (A-1) and (A-2), starting materials, control of the formation of by-product and the like are the same as those mentioned with respcet to the first aspect of the present invention.

In the deinking process which is usually employed and comprises defibering and/or aging steps, the deinking compositions of the first and second aspects of the present invention can be used by adding, in portions, to either or both of the defibering and aging steps.

In order to obtain high quality regenerated pulp, the deinking composition of the present invention should be added to a defibering step (or an equipment, pulper). Alternatively, to obtain a regenerated pulp having higher quality, the deinking process preferably comprises an aging step after the defibering step. The deinking composition may be added, in portions, to either or both of these defibering and aging steps, but is preferably added, in portions, to both of these defibering and aging steps.

As has already been discussed above, the deinking process can roughly be divided into two groups, i.e., a washing method and a flotation method. The deinking method in general comprises defibering, aging and washing or flotation steps. The defibering and aging steps are performed for separating ink printed on the surface of paper and finely dispersing the separated ink particles. Moreover, the washing step is carried out while the ink particles are dispersed as has been described above, but in the flotation step, the ink particles dispersed in a slurry must be coagulated during the defibering and aging steps. In other words, the washing step and the aging step require dispersed conditions of ink particles which oppose to each other. Accordingly, the deinking composition used in the flotation step must have abilities of separating and dispersing ink and an ability of coagulating the dispersed ink particles and these properties are opposed to one another. On the other hand, deinking composition required for three steps: defibering, aging and washing steps in the washing method may have the same properties.

However, the foregoing problems can be solved by the use of two different kinds of deinking compositions (A) and (B) or compositions (A-1) and (A-2) according to the present invention.

The amount of the deinking composition of the present invention to be added to each of the defibering and aging steps ranges from 0.10 to 2%, preferably 0.15 to 1% on the basis of th weight of waste paper. This is because if the amount is less than the lower limit, high quality regenerated pulp having a high brightness cannot be obtained, the foaming ability achieved is insufficient and ink particles are not satisfactorily removed during the flotation, while if the amount exceeds the upper limit, foaming during the flotation is too severe to ensure stable operation. In this respect, if the deinking composition is added to both defibering and aging steps, the total amount thereof to be added to these steps ranges from 0.1 to 2.1% by weight, preferably 0.15 to 1.5% by weight.

When deinking is carried out using the deinking composition of the invention, the defibering step is preferably performed at a pulp concentration ranging from 4 to 25%, a temperature ranging from 20 to 70°C in the presence of an alkaline agent such as sodium hydroxide, sodium silicate or sodium carbonate (pH = 7.5 to 11.5, preferably 8.0 to 11.5) and optionally a bleaching agent such as hydrogen peroxide in addition to the deinking composition of the present invention. If the pulp concentration is less than 4% or the temperature is less than 20 °C, the amount of undefibrated pulp increases since the frictional force between pulp fibers during defibering is low and the content of ink in the pulp increases. Thus, the resulting regenerated pulp cannot be used as starting material for paper-making. On the other hand, the pulp concentration exceeds 25% or the temperature is higher than 70 °C, high quality regenerated pulp cannot be obtained since the frictional force between pulp fibers is extremely high and the strength of the resulting regenerated pulp is reduced due to frictional heat. Further, if the pH value during the defibering is less than 7.5, the degree of swelling of the pulp fibers during the defibering is low and accordingly the content of undefibrated fibers increases, the content of ink in the pulp increases and, therefore, high quality regenerated pulp cannot be prepared. Thus, the resulting regenerated pulp cannot be used as starting material for paper-making. If the pH value exceeds 11.5, the resulting pulp causes yellowing by alkali baking, thereby the reduction of brightness occurs, and the strength of the resulting reclaimed paper is accordingly lowered.

The aging step may be carried out employing the same compositions used in the defibering step. The aging step is preferably performed at a pulp concentration ranging from 10 to 30%, a temprature ranging from 30 to 80°C for at least one hour. If the pulp concentration is less than 10% and the temperature is lower than 30 °C, a sufficient aging effect cannot be ensured and accordingly high quality regenerated pulp cannot be obtained. If the temperature exceeds 80 °C, the strength of the resulting reclaimed paper is lowered due to the effect of heat. Moreover, any significant aging effect cannot be anticipated even if the pulp concentration is increased to more than 30%. If pH for the aging step is lower than 8, any desired aging effect is not ensured. On the other hand, if the pH value exceeds 12, the resulting pulp causes yellowing due to the alkali baking and hence the brightness of the resulting pulp is impaired. Further, the strength of the resulting reclaimed paper is likewise lowered.

The separated ink can effectively be removed from the pulp slurry through the flotation performed at a pulp concentration of 0.5 to 1.5% and a temperature of 20 to 45°C.

The deinking method of the present invention may further comprise various steps commonly used in the deinking method such as dilution and/or dewatering steps, a screening step and treatments with a disperser and/or kneader without any influence on the quality of the resulting regenerated pulp and the operability of the method. In addition, the deinking composition of the present invention may likewise be added to an ink-separation step, for instance, to a kneader, a refiner and/or a disperser, in addition to the foregoing defibering and aging steps.

If the deinking composition of the present invention is used in the deinking step of the washing method, stable operation without accompanying any trouble due to foaming can be ensured and high quality regenerated pulp having a high brightness and a low content of remaining ink unlike the usual methods and those disclosed in known patents in which ethylene oxide/propylene oxide adducts of higher alcohols are used.

The deinking composition of the present invention can be used simultaneous with polyoxyalkylene alkyl ether sulfates, fatty acids or salts thereof and/or alkylene oxide adducts of rosin.

As has been explained above in detail, if the deinking composition of the present invention is used in the flotation method, excellent deinking effect can be anticipated and high quality regenerated pulp having a high brightness and a low content of remaining ink can be obtained. In particular, according to the present invention, an increase in the brightness of the resulting reclaimed paper of at least one rank higher than that observed for the conventional method can be achieved and the content of remaining ink is at least 25% lower than that observed when the compounds (A) and (B) or (A-1) and (A-2) are not simultaneously employed. Thus, the resulting reclaimed paper has a substantially improved brightness which can be recognized even with the naked eyes.

The present invention will hereinafter be explained in more detail with reference to the following Preparation Examples and non-limitative working Examples and the effects practically accomplished by the present invention will also be discussed in detail in comparison with Comparative Examples.

### Preparation Example 1

After charging 108.2 g (0.4 mole) of stearyl alcohol and 1.01 g (0.20% with respect to the final product) of KOH as a catalyst to an autoclave of stainless steel, the reaction system was sufficiently purged with nitrogen gas. Then the reaction system was sufficiently dehydrated at 135 ±5 °C for 0.5 hour under reduced pressure and 211.2 g (4.8 moles) of ethylene oxide was gradually added to the reaction system while maintaining the temperature and pressure at 125 ±5 °C and 1.0 to 3.0 kg/cm², respectively. After completion of the addition, the reaction system was matured at the reaction temperature for 2 hours and the unreacted ethylene oxide was removed under reduced pressure. Subsequently, 185.6 g (3.2 moles) of propylene oxide was gradually added while maintaining the temperature and pressure at 110 ±5 °C and 1.0 to 3.0 kg/cm², respectively. After completion of the addition, the reaction system was matured at the reaction temperature for 2 hours and the unreacted propylene oxide was removed under reduced pressure. Then acetic acid was added to adjust the pH of the reaction system to 6 to 8 (Sample 1).

The same procedures used above were repeated except that the conditions listed in Table 1 were used to give Samples 2 and 3.

### Preparation Example 2

After charging 108.2 g (0.4 mole) of stearyl alcohol and 1.27 g (0.2% with respect to the final product) of KOH as a catalyst to an autoclave of stainless steel, the reaction system was sufficiently purged with nitrogen gas. Then the reaction system was sufficiently dehydrated at 120°C for 2.0 hours under reduced pressure and 35.2 g (0.8 mole) of ethylene oxide was gradually added to the reaction system while maintaining the temperature and pressure at 175±5 °C and 1.0 to 3.0 kg/cm², respectively. After completion of the addition. the reaction system was matured at the reaction temperature for 2 hours and the unreacted ethylene oxide was removed under reduced pressure. Subsequently, a mixture comprising 281.6 g (6.4 moles) of ethylene oxide and 208 g (3.6 moles) of propylene oxide was gradually added while maintaining the temperature and pressure at 120±5 °C and 1.0 to 3.0 kg/cm², respectively. After completion of the addition, the reaction system was matured at the reaction temperature for 2 hours and the unreacted ethylene oxide and propylene oxide were removed under reduced pressure. Then the reaction mixture was cooled, 0.18 g (0.20% with respect to the final product) of KOH as a catalyst was additionally supplemented, the reaction system was sufficiently purged with nitrogen gas. Thereafter the reaction system was sufficiently dehydrated at 120 ±5 °C for 2 hours under reduced pressure and 92.8 g (1.6 mole) of propylene oxide was gradually added to the reaction system while maintaining the temperature and pressure at 115 ±5 °C and 1.0 to 3.0 kg/cm², respectively. After completion of the addition, the unreacted propylene oxide was removed under reduced pressure, followed by cooling and addition of acetic acid to adjust the pH of the reaction system to 6 to 8 (Sample 4).

The same procedures used above were repeated except that propylene oxide was added after randomly adding, in advance, ethylene oxide and propylene oxide under the conditions listed in Table 1 to give Sample 5.

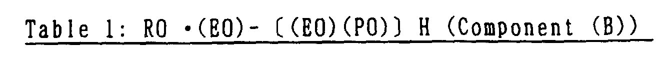

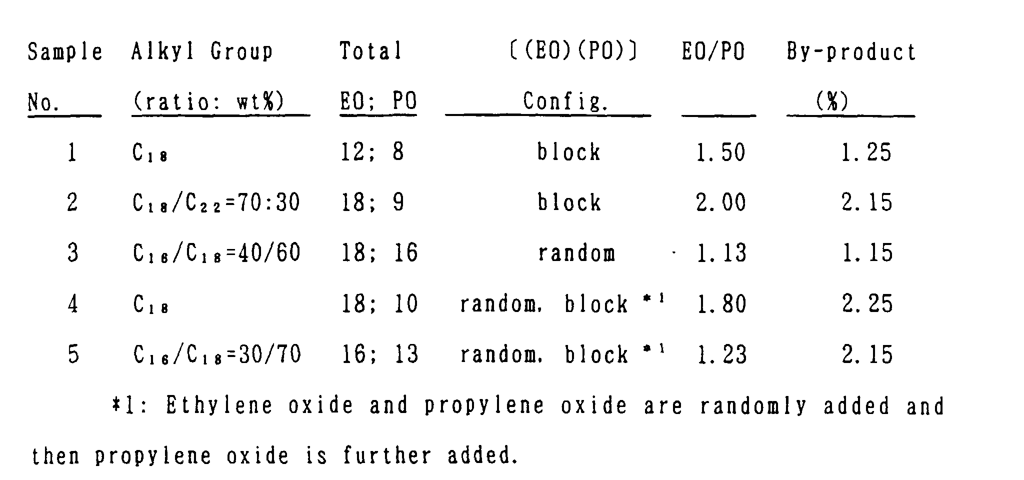

Terminal added PO molar numbers are 4 for Sample 4 and 5 for Sample 5.

### Preparation Example 3

After charging 108.2 g (0.4 mole) of stearyl alcohol and 1.20 g (0.18% with respect to propylene oxide (1 mole) adduct of stearyl alcohol) of KOH as a catalyst to an autoclave, the reaction system was sufficiently purged with nitrogen gas. Then the reaction system was sufficiently dehydrated at 140 ±5 °C for one hour under reduced pressure and 23.2 g (0.4 moles) of propylene oxide was gradually added to the reaction system while maintaining the temperature and pressure at 115 ±5 °C and 1.0 to 3.0 kg/cm², respectively. After completion of the addition, the reaction system was matured at the reaction temperature for 2 hours and the unreacted propylene oxide was removed under reduced pressure. Subsequently, the reaction system was cooled, 0.3 g (total amount of the catalyst with respect to the final product: 0.20%) of KOH was additionally supplemented, the reaction system was sufficiently purged with nitrogen gas, a mixture comprising 176 g (4 moles) of ethylene oxide and 440.8 g (7.6 moles) of propylene oxide was gradually added while maintaining the temperature and pressure at 120±5 °C and 1.0 to 3.0 kg/cm², respectively. After completion of the addition, the reaction system was matured, the unreacted ethylene oxide and propylene oxide were removed under reduced pressure, followed by cooling and addition of acetic acid to adjust the pH of the reaction system to 6 to 8 (Sample 6).

The same procedures used above were repeated except that the conditions listed in Table 2 were adopted to give Samples 7, 10 and 11. When the added ethylene oxide and propylene oxide were in the block configuration, ethylene oxide was first added and then propylene oxide was added.

### Preparation Example 4

After charging 108.2 g (0.4 mole) of stearyl alcohol and 1.67 g (0.23% with respect to propylene oxide (5 moles)· ethylene oxide (15 moles)·propylene oxide (10 moles) adduct of stearyl alcohol) of KOH as a catalyst to an autoclave, the reaction system was sufficiently purged with nitrogen gas. Then the reaction system was sufficiently dehydrated at 125±5 °C for 1.5 hour under reduced pressure and 116 g (2 moles) of propylene oxide was gradually added to the reaction system while maintaining the temperature and pressure at 115±5 °C and 1.0 to 3.0 kg/cm², respectively. After completion of the addition, the reaction system was matured at the reaction temperature for 2 hours and the unreacted propylene oxide was removed. Subsequently, a mixture comprising 270 g (6.1 moles) of ethylene oxide and 232 g (4 moles) of propylene oxide was gradually added while maintaining the temperature and pressure at 115±5 °C and 1.0 to 3.0 kg/cm², respectively. After completion of the addition, the reaction system was matured and the unreacted ethylene oxide and propylene oxide were removed. Then the reaction mixture was cooled, 0.44 g (total amount of the catalyst: 0.25% with respect to the final product) of KOH as a catalyst was additionally supplemented, the reaction system was sufficiently purged with nitrogen gas and sufficiently dehydrated at a high temperature under reduced pressure. Then 116 g (2 moles) of propylene oxide was gradually added to the reaction system while maintaining the temperature and pressure at 115±5 °C and 1.0 to 3.0 kg/cm², respectively. After completion of the addition, the reaction system was matured, the unreacted propylene oxide was removed, followed by cooling and addition of acetic acid to adjust the pH of the reaction system to 6 to 8 (Sample 8).

The same procedures used above were repeated except that the conditions listed in Table 2 were used to give Sample 9.

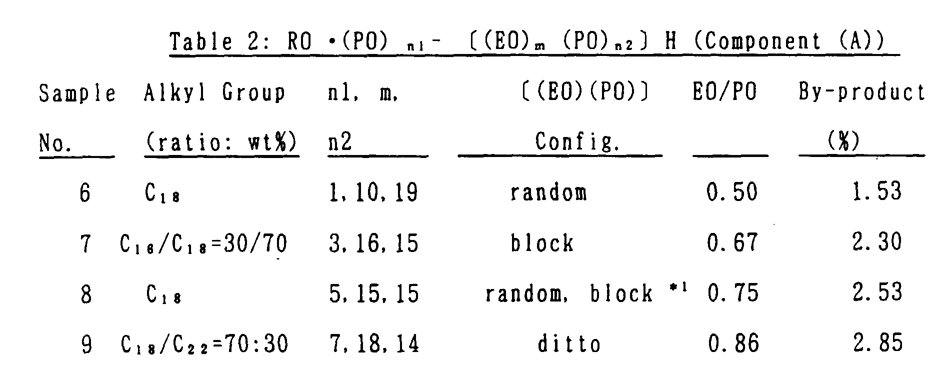

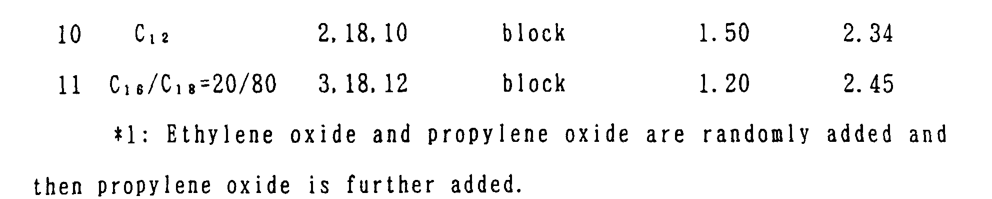

Terminal added PO molar numbers are 5 for Sample 8 and 6 for Sample 9.

### Comparative Preparation Example 1

The same procedures used in Preparation Example 1 except that ethylene oxide (18 moles) and propylene oxide (18 moles) were added to stearyl alcohol (1 mole) in a block configuration so that the ratio of the total molar number of the added ethylene oxide to the total molar number of the added propylene oxide was equal to 1 to give Sample 12.

**Table 3:**

| RO ·(EO)- [(EO)(PO)] H | | | | | |
|---|---|---|---|---|---|
| Sample No. | Alkyl Group | Total EO; PO | [(EO)(PO)] Config. | EO/PO | By-product (%) |
| 12 | C₁₈ | 18; 18 | block | 1.0 | 2.56 |

### Preparation Example 5

The same procedures used in Preparation Example 3 except that 4 moles of propylene oxide were first added to one mole of stearyl alcohol and then ethylene oxide (16 moles) and propylene oxide (12 moles) were added to the resulting adduct so that the ratio of the total molar number of the added ethylene oxide to the total molar number of the added propylene oxide was equal to 1 to give Sample 13.

**Table 4:**

| RO ·(PO) ₙ₁- [(EO)ₘ (PO)ₙ₂] H (Component (A)) | | | | | |
|---|---|---|---|---|---|
| Sample No. | Alkyl Group | n1, m, n2 | [(EO)(PO)] Config. | EO/PO | By-product (%) |
| 13 | C₁₈ | 4,16,12 | random | 1.0 | 2.48 |

### Comparative Preparation Example 2

Sample 14 was prepared by the same procedures used in Preparation Example 3 except for the condition set out in Table 5.

**Table 5:**

| RO ·(PO) ₙ₁- [(EO)ₘ (PO)ₙ₂] H (Component (A)) | | | | | |
|---|---|---|---|---|---|
| Sample No. | Alkyl Group (ratio: wt%) | n1, m, n2 | [(EO)(PO)] Config. | EO/PO | By-product (%) |
| 14 | C₁₂ | 30,42,9 | random | 1.08 | 2.89 |

### Example 1

Printed waste paper (weight ratio: offset-printed newspaper/magazine = 7/3) as a starting material was cut into pieces of 3 × 3 cm, introduced into a pulper (available from Kumagai Riki Kogyo Co., Ltd.), warm water or water was added to control the temperature and the pulp concentration, pH of the mixture was adjusted by the addition of sodium hydroxide and sodium silicate and then 1.0% (effective component) of hydrogen peroxide and 0.35% of various deinking compositions were added. Subsequently, the pulper was operated for 7 minutes to give a pulp slurry. The resulting pulp slurry was centrifuged using a filter cloth of 80 mesh to dewater and concentrate the slurry to a consistency of 15% and water was added to adjust the pulp consistency to 5%. Then the pulper was operated for 3 minutes to further defiber. Warm water was added to adjust the pulp consistency to 1% and the slurry was subjected to flotation for 7 minutes using a Denver type flotater (available from Kyokuto ShinkoCo., Ltd.). The resulting pulp slurry was then concentrated to a pulp consistency of 10% using a filter cloth of 80 mesh and diluted to 1% with water. Then a pulp sheet was prepared from the pulp slurry using a TAPPI sheet-making machine.

The brightness of the resulting pulp sheet was determined by a color and color difference meter (Nippon Denshoku Kogyo Co., Ltd.) according to the method defined in JIS P-8123 and the content of the remaining ink was determined by an image-analyzer (Luzex: available from Nikore Co., Ltd.) in terms of the rate of area of the resulting reclaimed paper on which ink remains.

The results obtained are summarized in Table 6. In Table 6, operability during flotation (effect of foams) was evaluated on the basis of the following criteria. Further the effect accomplished by the simultaneous use of the deinking compositions, Samples 3 and 8. was examined for various amounts. The results are listed in Table 7.
A: Operability is good;
B: Foams are formed slightly in excess, but do not affect the operability.
C: Foams are formed rather insufficiently, but do not affect the operability.
D: Foams are excessly formed and the deinking operation is accordingly impracticable.
E: Foams are only slightly formed and accordingly the deinking operation is impracticable.

**Table 6**

| Test No. | Deinking Composition (wt%) | Deinking Conditions | | | Brightness | Residual Ink | Operability |
|---|---|---|---|---|---|---|---|
| | | PC | Temp. | pH | | | |
| 1 | No.1/No.7:40/60 | 5 | 25 | 9.5 | 58.4 | 0.250 | B |
| 2 | No.2/No.6:10/90 | 15 | 40 | 10.9 | 57.7 | 0.275 | C |
| 3 | No.3/No.8:20/80 | 5 | 40 | 9.8 | 58.1 | 0.258 | A |
| 4 | No.4/No.9:70/30 | 25 | 65 | 10.5 | 58.2 | 0.254 | B |
| 5 | No.5/No.7:55/45 | 15 | 30 | 11.5 | 58.4 | 0.251 | A |
| 6 | No.1/No.8:33/67 | 15 | 40 | 10.9 | 58.0 | 0.260 | A |
| 7 | No.2/No.10:40/60 | 15 | 40 | 11.2 | 57.4 | 0.280 | B |
| 8 | No.3/No.7:70/30 | 15 | 40 | 11.3 | 59.2 | 0.214 | A |
| 9 | No.3/No.11:70/30 | 15 | 40 | 11.1 | 58.6 | 0.233 | A |
| 10 | No. 2 | 15 | 40 | 10.9 | 55.6 | 0.376 | B |
| 11 | No. 6 | 15 | 40 | 10.9 | 55.7 | 0.380 | E |
| 12 | No. 12 | 15 | 40 | 10.9 | 55.3 | 0.391 | A |
| 13 | No. 13 | 15 | 40 | 10.9 | 55.4 | 0.388 | B |
| 14 | No. 7 | 15 | 40 | 10.8 | 55.9 | 0.363 | A |
| Test Nos. 1∼9: Examples; Test Nos. 10∼14: Comparative Examples. | | | | | | | |

**Table 7**

| Deinking Composition (wt%) | Amount Added at Defibering Step | Brightness | Residual Ink | Operability |
|---|---|---|---|---|
| No. 3/No. 8: 20/80 | 0.08 | 57.0 | 0.293 | E |
| | 0.10 | 57.5 | 0.276 | C |
| | 0.35 | 58.1 | 0.258 | A |
| | 1.00 | 58.7 | 0.232 | A |
| | 2.00 | 59.1 | 0.221 | B |
| | 2.50 | 58.4 | 0.235 | D |
| Defibering Conditions: PC = 5%; Temp. = 40°C; and pH = 9.8. | | | | |

### Example 2

Printed waste paper (weight ratio: offset-printed newspaper/magazine = 7/3) as a starting material was cut into pieces of 3 × 3 cm, introduced into a pulper (available from Kumagai Riki Kogyo Co., Ltd.), warm water or water was added to control the temperature and the pulp consistency and pH of the mixture was adjusted by the addition of sodium hydroxide and sodium silicate. Then 0.15% of deinking compositions as listed in Table 8 were added and the pulper was operated for 7 minutes to give a pulp slurry. The resulting pulp slurry was centrifuged using a filter cloth of 80 mesh to dewater and adjust the pulp concentration of the slurry and pH of the slurry was adjusted by the addition of sodium hydroxide and sodium silicate. Thereafter, 1.7% of hydrogen peroxide and 0.1% of deinking composition were added and the mixture was aged in a thermostatic oven.

After the aging, the pulp consistency of the slurry was again adjusted to 5% with water and the pulper was operated for 3 minutes to perform defibering. Then warm water was added to control the pulp consistency to 1% and the slurry was subjected to flotation at 30°C for 7 minutes using a Denver type flotater (available from Kyokuto Shinko Co., Ltd.). The resulting pulp slurry was then concentrated to a pulp consistency of 10% using a filter cloth of 80 mesh and diluted to 1% with water. Then a pulp sheet was prepared from the slurry using a TAPPI sheet-making machine.

The brightness of the resulting pulp sheet was determined by a color measuring color-difference meter (Nippon Denshoku Kogyo Co., Ltd.) according to the method defined in JIS P-8123 and the content of the remaining ink was determined by an image-analyzer (Luzex: available from Nikore Co., Ltd.) in terms of the rate of area of the resulting paper on which ink remains.

The results obtained are summarized in Table 8. Further the effect accomplished by the simultaneous use of the deinking compositions, Samples 2 and 6 was examined for various amounts. The results are listed in Table 9.

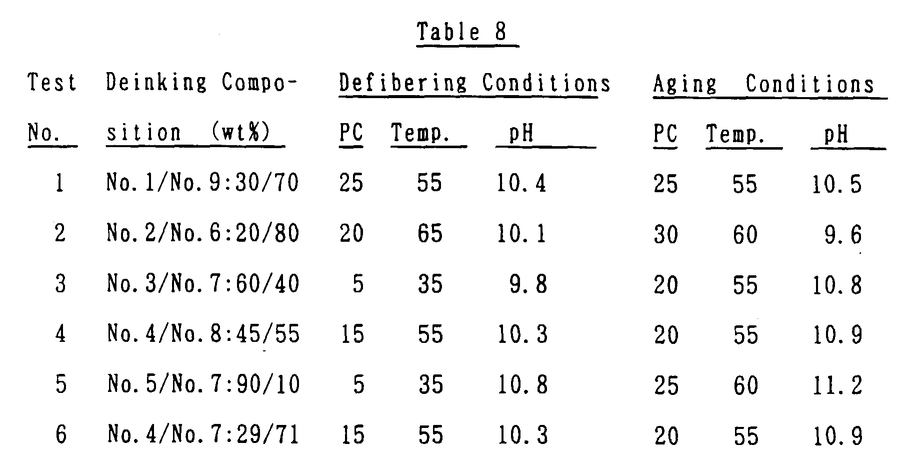

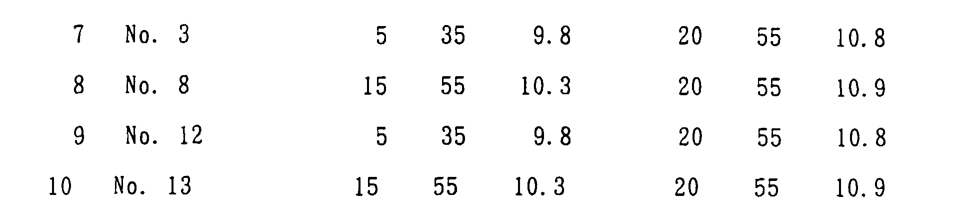

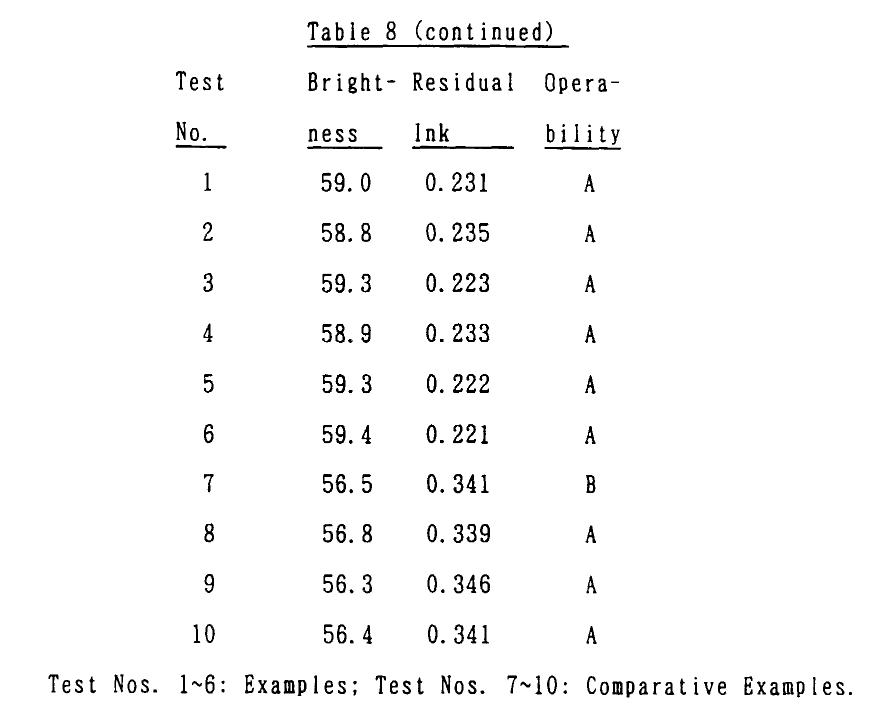

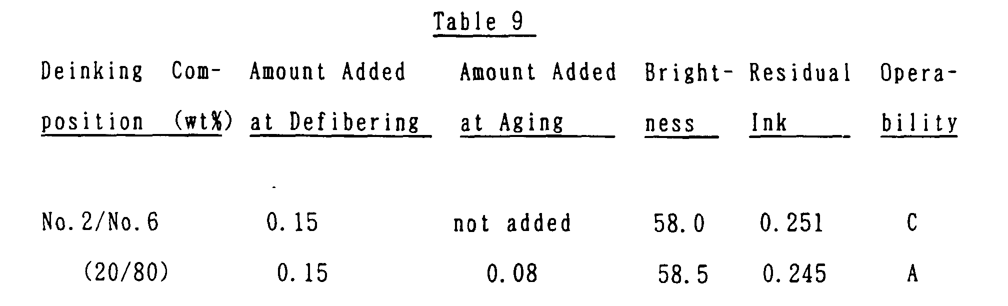

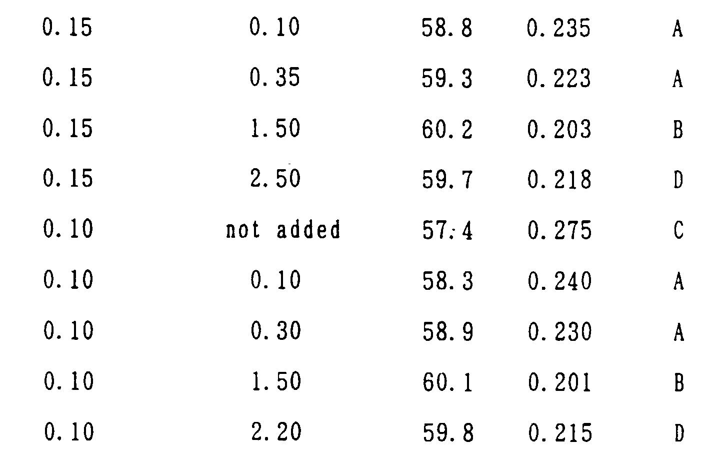

### Example 3

Printed waste paper (weight ratio: offset-printed newspaper/magazine = 7/3) as a starting material was cut into pieces of 3 × 3 cm, introduced into a pulper (available from Kumagai Riki Kogyo Co., Ltd.), warm water was added to control the temperature to 40 °C and the pulp concentration of 40 %, pH of the mixture was adjusted to 10.5 by the addition of sodium hydroxide and sodium silicate and then defiber treatment was conducted for seven minutes after various deinking compositions set out in Table 10 were added thereto in an amount of 0.15 wt %. The resulting pulp slurry was centrifuged using a filter cloth of 80 mesh to dewater and control the concentration of the slurry, after which pH of the slurry was adjusted to 11 by the addition of sodium hydroxide and sodium silicate. Subsequently, hydrogen peroxide and the deinking compositions were added thereto in an amount of 1.5 % and 0.2 %, respectively to age the slurry in a temperature-controlled bath at a temperature of 50°C for 3 hours. After aging, water was added to adjust the pulp consistency to 5%. Then the pulper was operated for 3 minutes to further defiber. Warm water was added to adjust the pulp consistency to 1% and the slurry was subjected to flotation for 7 minutes at a temerature of 30 °C using a Denver type flotater (available from Kyokuto Shinko Co., Ltd.). The resulting pulp slurry was then concentrated to a pulp consistency of 10% using a filter cloth of 80 mesh and diluted to 1% with water. Then a pulp sheet was prepared from the pulp slurry using a TAPPI sheet-making machine.

The brightness and b value of the resulting pulp sheet was determined by a color and color difference meter (Nippon Denshoku Kogyo Co., Ltd.) according to the method defined in JIS P-8123 and the content of the remaining ink was determined by an image-analyzer (Luzex: available from Nireco Co., Ltd.) in terms of the amount of fine ink particles of not larger than 4 µm.

The results obtained are summarized in Table 10. In this respect, please note that b value is obtained in Lab color system by Hunter color difference meter, and that the smaller the amount of fine ink particles, the higher the b value, so that the b value can be used as an indicator of the amount of fine ink particles.

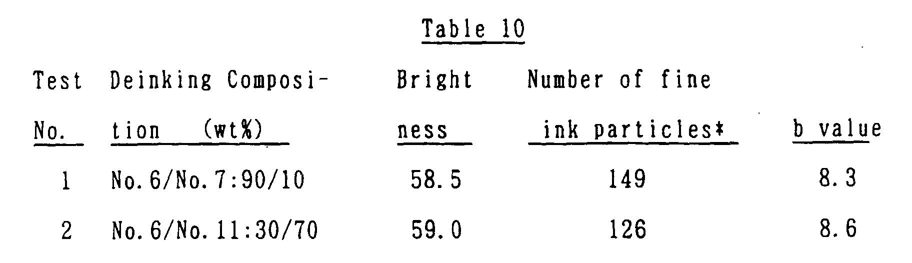

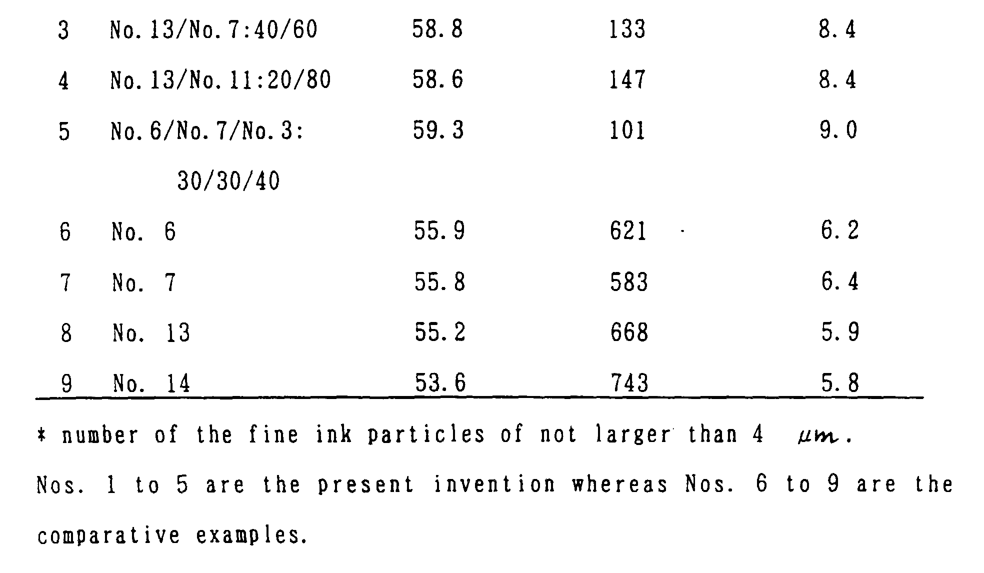

## Claims

1. A deinking composition for regeneration of waste paper by flotation comprising
99.7 to 97% by weight of a mixture which comprises monoalkyl ethers of ethylene oxide/propylene oxide copolymers represented by the following general formulas (A) and (B)
R¹O - (PO)ₙ₁ - [(EO)ₘ · (PO)ₙ₂] - H (A)
R²O - (EO)ₘ₁ - [(EO)ₘ₂ · (PO)ₙ] - H (B)
wherein R¹ represents an alkyl group having 12 to 22 carbon atoms; R² represents an alkyl group having 16 to 24 carbon atoms; m/n1 + n2 ranges from 0.5 to 1.5; ml + m2/n ranges from 1.1 to 2.0, the averaged molar numbers m and m1 + m2 of added ethylene oxide moieties range from 10 to 30 and the averaged molar numbers n and n1 + n2 of added propylene oxide moieties range from 8 to 35; EO and PO represent ethylene oxide and propylene oxide units respectively; the EO and PO in the brackets may be in either a random or block configuration; and the weight ratio of the compound (A) to the compound (B) ranges from 10:90 to 90:10;
and 0.3 to 3.0% by weight of a polyoxyalkylene oxide selected from
polyethylene oxides, polypropylene oxide and ethylene oxide/propylene oxide copolymers.

2. The deinking composition of claim 1 wherein m ranges from 12 to 28 and n ranges from 9 to 30.

3. The deinking composition of claim 1 or 2 wherein the alkyl group represented by R¹ has 16 to 22 carbon atoms and the alkyl group represented by R² has 18 to 22 carbon atoms.

4. The deinking composition of any of claims 1 to 3 wherein the moiety: ((EO) ₘ ·(PO) ₙ₂] of the compound (A) is in a block configuration and the moiety: [(EO)ₘ₂ · (PO) ₙ] of the compound (B) is in a random configuration.

5. A deinking composition for regeneration of waste paper by flotation which comprises
99.7 to 97% by weight of a mixture comprising monoalkyl ethers of ethylene oxide/propylene oxide copolymers represented by the following general formulas (A-1) and (A-2)
R³O - (PO)ₙ₃ - (EO)ₘ · (PO)ₙ₄ - H (A-1)
R⁴O - (PO)ₙ₅ - [(EO)ₘ · (PO)ₙ₆] - H (A-2)
wherein R³ and R⁴ independently represent an alkyl group having 12 to 22 carbon atoms; m/n3 + n4 = 0.5∼1.5; m/n5 + n6 = 0.5∼1.5, the averaged molar number m of the added ethylene oxide moieties ranges from 10 to 30 and the averaged molar numbers n3 + n4 and n5 + n6 of the added propylene oxide moieties range from 8 to 35; EO and PO represent ethylene oxide and propylene oxide units respectively, (EO)ₘ · (PO)ₙ₄ being in the form of a block configuration and [(EO)ₘ · (PO)ₙ₆] being in the form of a random configuration; and the mixing ratio of the compound (A-1) to the compound (A-2) ranging from 10:90 to 90:10 (weight ratio);
and 0.3 to 3.0% by weight of a polyalkylene oxide selected from the group consisting of polyethylene oxides, polypropylene oxides and ethylene oxide/propylene oxide copolymers.

6. A flotation method for deinking printed waste paper comprising the steps of defibering printed waste paper in the presence of a deinking composition to form a pulp slurry and then separating and removing separated ink particles from the pulp slurry through flotation, wherein the deinking composition is as defined in any of claims 1 to 5.

7. The flotation method of claim 6 wherein the amount of the deinking composition ranges from 0.1 to 2% by weight on the basis of the weight of the waste paper.

8. The flotation method of claim 6 or 7 wherein the defibering step is carried out at a pH ranging from 7.5 to 11.5.

9. The flotation method of claim 8 wherein the defibering step is carried out at a pulp consistency ranging from 4 to 25%, a temperature ranging from 20 to 70 °C and a pH ranging from 8.0 to 11.5.

10. A flotation method for deinking printed waste paper comprising defibering the printed waste paper, aging the resulting pulp slurry in the presence of a deinking composition, and then separating and removing the separated ink particles from the pulp slurry through the flotation, wherein the deinking composition is as defined in any of claims 1 to 4.

11. The flotation method of claim 10 wherein the amount of the deinking composition ranges from 0.1 to 2% by weight on the basis of the weight of the waste paper.

12. The flotation method of claim 10 or 11 wherein the aging step is carried out at a pH ranging from 8.0 to 12.

13. The flotation method of any of claims 10 to 12 wherein the aging step is carried out at a pulp consistency ranging from 10 to 30% and a temperature ranging from 30 to 80 °C.

14. The flotation method of any of claims 10 to 13 wherein m ranges from 12 to 28 and n ranges from 9 to 30.

15. A flotation method for deinking printed waste paper comprising the steps of adding a deinking composition to printed waste paper, defibering the waste paper, further adding the deinking composition to the waste paper, aging the waste paper to form a pulp slurry and then separating and removing separated ink particles from the pulp slurry through flotation. wherein the deinking composition is as defined in any of claims 1 to 4.

16. The flotation method of claim 15 wherein the defibering step is carried out at a pH ranging from 7.5 to 11.5 and the aging step is carried out at a pH ranging from 8.0 to 12.

17. The flotation method of claim 15 or 16 wherein the amount of the deinking composition in the defibering and aging steps ranges from 0.1 to 2% by weight on the basis of the weight of the waste paper, respectively.

18. The flotation method of any of claims 15 to 17 wherein the overall amount of the deinking composition added to the defibering and aging steps ranges from 0.2 to 2.1% by weight on the basis of the weight of the waste paper.

19. The flotation method of any of claims 15 to 18 wherein m ranges from 12 to 28 and n ranges from 9 to 30.

## Patentansprüche

1. Entfärbungszusammensetzung zur Aufarbeitung von Altpapier durch Flotation, umfassend
99,7 bis 97 Gew.-% eines Gemisches, das Monoalkylether von Ethylenoxid / Propylenoxidcopolymeren der folgenden allgemeinen Formeln (A) und (B)
R¹ O - (PO)ₙ₁ - [(EO)ₘ · (PO)ₙ₂] - H (A)
R² O -(EO)ₘ₁ - [(EO)ₘ₂ · (PO)ₙ] - H (B)
umfaßt, wobei R¹ einen Alkylrest mit 12 bis 22 Kohlenstoffatomen bedeutet, R² einen Alkylrest mit 16 bis 24 Kohlenstoffatomen bedeutet, m / n1 + n2 im Bereich von 0,5 bis 1,5 liegt, m1 + m2 / n im Bereich von 1,1 bis 2,0 liegt, die gemittelten Molzahlen m und m1 + m2 der zugegebenen Ethylenoxideinheiten im Bereich von 10 bis 30 liegen und die gemittelten Molzahlen n und n1 + n2 der zugegebenen Propylenoxideinheiten im Bereich von 8 bis 35 liegen, EO und PO Ethylenoxid bzw. Propylenoxideinheiten darstellen, die EO und PO in den Klammern sowohl in einer statistischen als auch einer Blockkonfiguration vorliegen können und das Gewichtsverhältnis der Verbindung (A) zu Verbindung (B) im Bereich von 10 : 90 bis 90 : 10 liegt,
und 0,3 bis 3,0 Gew.-% eines Polyalkylenoxids, das aus Polyethylenoxid, Polypropylenoxid und Ethylenoxid / Propylenoxidcopolymeren ausgewählt ist.

2. Entfärbungszusammensetzung nach Anspruch 1, wobei m im Bereich von 12 bis 28 und n im Bereich von 9 bis 30 liegt.

3. Entfärbungszusammensetzung nach Anspruch 1 oder 2, wobei der durch R¹ dargestellte Alkylrest 16 bis 22 Kohlenstoffatome und der durch R² dargestellte Alkylrest 18 bis 22 Kohlenstoffatome aufweist.

4. Entfärbungszusammensetzung nach einem der Ansprüche 1 bis 3, wobei die Einheit [(EO)ₘ · (PO)ₙ₂] der Verbindung (A) in einer Blockkonfiguration und die Einheit [(EO)ₘ₂ · (PO)ₙ] der Verbindung (B) in einer statistischen Konfiguration vorliegt.

5. Entfärbungszusammensetzung zur Aufarbeitung von Altpapier durch Flotation, umfassend
99,7 bis 97 Gew.-% eines Gemisches, das Monoalkylether von Ethylenoxid / Propylenoxidcopolymeren der folgenden allgemeinen Formeln (A-1) und (A-2)
R³ O - (PO)ₙ₃ -(EO)ₘ · (PO)ₙ₄ - H (A-1)
R⁴ O - (PO)ₙ₅ - [(EO)ₘ · (PO)ₙ₆] - H (A-2)
umfaßt, wobei R³ und R⁴ unabhängig voneinander einen Alkylrest mit 12 bis 22 Kohlenstoffatomen bedeuten, m / n3 + n4 im Bereich von 0,5 bis 1,5 liegt, m / n5 + n6 im Bereich von 0,5 bis 1,5 liegt, die gemittelte Molzahl m der zugegebenen Ethylenoxideinheiten im Bereich von 10 bis 30 liegt und die gemittelten Molzahlen n3 + n4 und n5 + n6 der zugegebenen Propylenoxideinheiten im Bereich von 8 bis 35 liegen, EO und PO Ethylenoxid- bzw. Propylenoxideinheiten darstellen, (EO)ₘ · (PO)ₙ₄ in einer Blockkonfiguration und [(EO)ₘ · (PO)ₙ₆] in einer statistischen Konfiguration vorliegen und das Mischungsverhältnis der Verbindung (A-1) zu Verbindung (A-2) im Bereich von 10 : 90 bis 90 : 10 liegt,
und 0,3 bis 3,0 Gew.-% eines Polyalkylenoxids, das aus Polyethylenoxid, Polypropylenoxid und Ethylenoxid / Propylenoxidcopolymeren ausgewählt ist.

6. Flotationsverfahren zum Entfärben von bedrucktem Altpapier, umfassend die Schritte der Entfaserung des bedruckten Altpapiers in Gegenwart einer Entfärbungszusammensetzung, wobei eine Fasersuspension entsteht, und dann der Trennung und des Entfemens der abgetrennten Druckfarbeteilchen aus der Fasersuspension durch Flotation, wobei die Entfärbungszusammensetzung wie in einem der Ansprüche 1 bis 5 definiert ist.

7. Flotationsverfahren nach Anspruch 6, wobei die Menge der Entfärbungszusammensetzung im Bereich von 0,1 bis 2 Gew.-%, bezogen auf das Gewicht des Altpapiers liegt.

8. Flotationsverfahren nach Anspruch 6 oder 7, wobei der Entfaserungsschritt bei einem pH-Wert im Bereich von 7,5 bis 11,5 ausgeführt wird.

9. Flotationsverfahren nach Anspruch 8, wobei der Entfaserungsschritt bei einer Zellstoffdichte im Bereich von 4 bis 25 %, einer Temperatur im Bereich von 20 bis 70 °C und einem pH-Wert im Bereich von 8,0 bis 11,5 ausgeführt wird.

10. Flotationsverfähren zum Entfärben von bedrucktem Altpapier, umfassend die Entfaserung des bedruckten Altpapiers, das Altern der erhaltenen Fasersuspension in Gegenwart einer Entfärbungszusammensetzung und dann die Trennung und das Entfemen der getrennten Druckfarbeteilchen aus der Fasersuspension durch Flotation, wobei die Entfärbungszusammensetzung wie in einem der Ansprüche 1 bis 4 definiert ist.

11. Flotationsverfahren nach Anspruch 10, wobei die Menge der Entfärbungszusammensetzung im Bereich von 0,1 bis 2 Gew.-%, bezogen auf das Gewicht des Altpapiers liegt.

12. Flotationsverfahren nach Anspruch 10 oder 11, wobei der Alterungsschritt bei einem pH-Wert im Bereich von 8,0 bis 12 ausgeführt wird.

13. Flotationsverfahren nach einem der Ansprüche 10 bis 12, wobei der Alterungsschritt bei einer Zellstoffdichte im Bereich von 10 bis 30 % und einer Temperatur im Bereich von 30 bis 80 °C ausgeführt wird.

14. Flotationsverfahren nach einem der Ansprüche 10 bis 13, wobei m im Bereich von 12 bis 28 und n im Bereich von 9 bis 30 liegt.

15. Flotationsverfahren zum Entfärben von bedrucktem Altpapier, umfassend die Schritte der Zugabe der Entfärbungszusammensetzung zu dem bedruckten Altpapier, der Entfaserung des Altpapiers, der weiteren Zugabe der Entfärbungszusammensetzung zu dem Altpapier, des Alterns des Altpapiers, wobei eine Fasersuspension entsteht, und dann der Trennung und des Entfemens der abgetrennten Druckfarbeteilchen aus der Fasersuspension durch Flotation, wobei die Entfärbungszusammensetzung wie in einem der Ansprüche 1 bis 4 definiert ist.

16. Flotationsverfahren nach Anspruch 15, wobei der Entfäserungsschritt bei einem pH-Wert im Bereich von 7,5 bis 11,5 und der Alterungsschritt bei einem pH-Wert von 8,0 bis 12 ausgeführt wird.

17. Flotationsverfahren nach Anspruch 15 oder 16, wobei die Menge der Entfärbungszusammensetzung im Entfaserungs- bzw. Alterungsschritt im Bereich von 0,1 bis 2 Gew.-%, bezogen auf das Gewicht des Altpapiers liegt.

18. Flotationsverfahren nach einem der Ansprüche 15 bis 17, wobei die Gesamtmenge der Entfärbungszusammensetzung, die in den Entfaserungs- bzw. Alterungsschritten zugegeben wird, im Bereich von 0,2 bis 2,1 Gew.-%, bezogen auf das Altpapier liegt.

19. Flotationsverfahren nach einem der Ansprüche 15 bis 18, wobei m im Bereich von 12 bis 28 und n im Bereich von 9 bis 30 liegt.

## Revendications

1. Composition pour désencrage en vue de régénérer par flottation des déchets de papier ou du vieux papier, la composition comprenant :
99,7 à 97 % en poids d'un mélange qui comprend des éthers monoalkyliques de copolymères oxyde d'éthylène/oxyde de propylène représentés par les formules générales (A) et (B) suivantes :
R¹O - (PO)ₙ₁ - [(EO)ₘ · (PO)ₙ₂] - H (A)
R²O - (EO)ₘ₁ - [(EO)ₘ₂ · (PO)ₙ] - H (B)
formules dans lesquelles R¹ représente un groupe alkyle ayant 12 à 22 atomes de carbone; R² représente un groupe alkyle ayant 16 à 24 atomes de carbone; m/n1 + n2 se situe entre 0,5 et 1,5; m1 + m2/n se situe entre 1,1 et 2,0; les nombres moyens de moles (nombres molaires) m et m1 + m2 des fragments oxyde d'éthylène fixés par addition se situent entre 10 et 30 et les nombres moyens de moles n et n1 + n2 des fragments oxyde de propylène fixés par addition se situent entre 8 et 35; EO et PO représentent des motifs oxyde d'éthylène et oxyde de propylène, respectivement; et les EO et PO mis entre crochets peuvent être en configuration statistique ou en configuration de blocs ou longues séquences; et le rapport pondéral entre le composé (A) et le composé (B) se situe entre 10:90 et 90:10 ;
et 0,3 à 3,0 % en poids d'un poly(oxyde d'alkylène) choisi parmi des poly(oxydes d'éthylène), des poly(oxydes de propylène) et des copolymères oxyde d'éthylène/ oxyde de propylène.

2. Composition pour désencrage selon la revendication 1, dans laquelle m vaut de 12 à 28 et n vaut de 9 à 30.

3. Composition pour désencrage selon la revendication 1 ou 2, dans laquelle le groupe alkyle représenté par R¹ comporte 16 à 22 atomes de carbone et le groupe alkyle représenté par R² comporte 18 à 22 atomes de carbone.

4. Composition pour désencrage selon l'une quelconque des revendications 1 à 3, dans laquelle le fragment [(EO)ₘ · (PO)ₙ₂] du composé (A) est sous forme d'une configuration par blocs ou longues séquences et le fragment : [(EO)ₘ₂ · (PO)ₙ] du composé (B) est en configuration statistique.

5. Composition pour désencrage pour la régénération de déchets de papier ou de vieux papier par flottation, la composition comprenant :
99,7 à 97 % en poids d'un mélange comprenant des éthers monoalkyliques de copolymères de l'oxyde d'éthylène/oxyde de propylène représentés par les formules générales (A-1) et (A-2) suivantes :
R³O - (PO)ₙ₃ - [(EO)ₘ · (PO)ₙ₄] - H (A-1)
R⁴O - (PO)ₙ₅ - [(EO)ₘ · (PO)n₆] - H (A-2)
dans lesquelles R³ et R⁴ représentent chacun, indépendamment, un groupe alkyle ayant 12 à 22 atomes de carbone ; m/n3 + n4 = 0,5 à 1,5 ; m/n5 + n6 = 0,5 à 1,5 ; le nombre moyen des moles m des fragments oxyde d'éthylène fixés par addition se situe entre 10 et 30 et les nombres moyens de moles (nombres molaires moyens) n3 + n4 et n5 + n6 des fragments oxyde de propylène fixés par addition se situent entre 8 et 35 ; EO et PO représentent des motifs oxyde d'éthylène et oxyde de propylène, respectivement; (EO)ₘ · (PO)ₙ₄ étant sous forme d'une configuration en blocs ou longues séquences et [(EO)ₘ · (PO)ₙ₆] étant sous forme d'une configuration statistique; et le rapport de mélangeage du composé (A-1) au composé (A-2) se situe entre 10:90 et 90:10 (rapport pondéral) ;
et 0,3 à 3,0 % en poids d'un poly(oxyde d'alkylène) choisi dans l'ensemble consistant en des poly(oxydes d'éthylène), des poly(oxydes de propylène) et des copolymères oxyde d'éthylène/oxyde de propylène.

6. Procédé de flottation pour désencrer des déchets de papier imprimé, ce procédé comprenant les étapes consistant à défibrer des déchets de papier imprimé en opérant en présence d'une composition pour désencrage afin de former une suspension de pâte puis de séparation et d'enlèvement des particules d'encre ainsi séparées de la pâte, séparation effectuée par flottation, procédé dans lequel la composition pour désencrage est telle que définie dans l'une quelconque des revendications 1 à 5.

7. Procédé de flottation selon la revendication 6, dans lequel la quantité de la composition pour désencrage se situe entre 0,1 et 2 % en poids, sur la base du poids des déchets de papier ou du vieux papier.

8. Procédé de flottation selon la revendication 6 ou 7, dans lequel l'étape de défibrage est effectuée à un pH compris entre 7,5 et 11,5.

9. Procédé de flottation selon la revendication 8, dans lequel l'étape de défibrage est effectuée à une consistance ou concentration de pâte comprise entre 4 et 25 %, à une température comprise entre 20 et 70°C et à un pH compris entre 8,0 et 11,5.

10. Procédé de flottation pour désencrer des déchets de papier imprimé, ce procédé comprenant le défibrage de déchets de papier imprimé, le vieillissement de la suspension de pâte résultante en présence d'une composition pour désencrage, puis la séparation et l'enlèvement, par flottation, des particules d'encre séparée de la suspension de pâte, procédé dans lequel la composition de désencrage est comme définie dans l'une quelconque des revendications 1 à 4.

11. Procédé de flottation selon la revendication 10, dans lequel la quantité de la composition pour désencrage se situe entre 0,1 et 2 % en poids, sur la base du poids des déchets de papier ou du vieux papier.

12. Procédé de flottation selon la revendication 10 ou 11, dans lequel l'étape de vieillissement est effectuée à un pH compris entre 8,0 et 12.

13. Procédé de flottation selon l'une quelconque des revendications 10 à 12, dans lequel l'étape de vieillissement est effectuée à une consistance ou concentration de pâte comprise entre 10 et 30 % et à une température comprise entre 30 et 80°C.

14. Procédé de flottation selon l'une quelconque des revendications 10 à 13, dans lequel m vaut de 12 à 28 et n vaut de 9 à 30.

15. Procédé de flottation pour désencrer des déchets de papier imprimé, ce procédé comprenant les étapes consistant à ajouter une composition pour désencrage à des déchets de papier imprimé, à défibrer les déchets de papier, puis à ajouter la composition pour désencrage aux déchets de papier, à faire vieillir les déchets de papier pour former une suspension de pâte et à séparer ensuite et enlever par flottation les particules d'encre séparée de la suspension de pâte, procédé dans lequel la composition pour désencrage est telle que définie dans l'une quelconque des revendications 1 à 4.

16. Procédé de flottation selon la revendication 15, dans lequel l'étape de défibrage est effectuée à un pH compris entre 7,5 et 11,5 et l'étape de vieillissement est réalisée à un pH compris entre 8,0 et 12.

17. Procédé de flottation selon la revendication 15 ou 16, dans lequel la quantité de la composition pour désencrage utilisée dans les étapes de défibrage et de vieillissement se situe entre 0,1 et 2 % en poids, sur la base du poids des déchets de papier, respectivement.

18. Procédé de flottation selon l'une quelconque des revendications 15 à 17, dans lequel la quantité totale de la composition pour désencrage ajoutée lors des étapes de défibrage et de vieillissement se situe entre 0,2 et 2,1 % en poids, sur la base du poids des déchets de papier.

19. Procédé de flottation selon l'une quelconque des revendications 15 à 18, dans lequel m vaut de 12 à 28 et n vaut de 9 à 30.
